# EUROPEAN PATENT APPLICATION

(11) **EP 4 528 542 A1**
(43) Date of publication of application: **26.03.2025**
(21) Application number: 23829731.1
(22) Date of filing: 11.05.2023
(51) Int. Cl.: G06F 16/638

(54) **SONG LIST DISPLAY INFORMATION GENERATION METHOD AND APPARATUS, ELECTRONIC DEVICE AND STORAGE MEDIUM**

(30) Priority: 01.07.2022 CN 202210774585
(71) Applicant: Beijing Zitiao Network Technology Co., Ltd., Beijing 100190 (CN); Lemon Inc., Grand Cayman, KY1-1205 (KY)
(72) Inventor: LIN, Xiaohui, Beijing 100028 (CN); DAI, Junyu, Beijing 100028 (CN); ZHANG, Luxi, Beijing 100028 (CN); DENG, Lelai, Beijing 100028 (CN); GUO, Guanjun, Beijing 100028 (CN); HE, Jie, Beijing 100028 (CN); TAO, Chuangui, Beijing 100028 (CN); SONG, Xuchen, Los Angeles, California 90066 (US); LIU, Ziheng, Beijing 100028 (CN)
(74) Representative: Williams, Michael David
(86) International application number: PCT/CN2023/093667
(87) International publication number: WO 2024/001545

(57) **Abstract**

Provided in the embodiments of the present disclosure are a song list display information generation method and apparatus, an electronic device, a computer-readable storage medium, a computer program product and a computer program. The method comprises: acquiring a target song list, the target song list comprising at least one song to be played back; and generating display information corresponding to the target song list, the display information being generated on the basis of song list metadata of the target song list, the song list metadata representing multi-dimensional features of said at least one song, and the display information comprising a song list title and/or a song list cover corresponding to the target song list. By acquiring the target song list and generating the display information by means of targeted use of the song list metadata of the target song list, the present invention allows the generated display information to be matched with the target song list in respect of multiple dimensions, thus improving the consistency of the generated display information and song list content, and achieving accurate display of the features of the song list content.

## Description

### CROSS-REFERENCE TO RELATED APPLICATION

The application claims the priority of Chinese patent application filed in Chinese Patent Office on July 1, 2022 with the application number 202210774585.7 and the application title "method and apparatus for generating display information of a playlist, electronic device and storage medium", the entire contents of which are incorporated into the application by reference.

### TECHNICAL FIELD

The embodiment of the present disclosure relates to the technical field of the Internet, in particular to a method and an apparatus for generating display information of a playlist, an electronic device, a computer-readable storage medium, a computer program product and a computer program.

### BACKGROUND

At present, the manner of music Application (referred as APP) and music platforms recommending songs to users include not only the recommendation for a single song, but also the recommendation for a collection of multiple songs, that is, playlist recommendation. At the same time, it is necessary to generate display information such as a cover, and a title matching with the playlist to display the playlist, so as to attract the users to consume the playlist.

However, in the prior art, the display information generated for the playlist has the problems of low matching degree with the content of the playlist and inability to accurately display the features of the content of the playlist.

### SUMMARY

The embodiments of the present disclosure provide a method and an apparatus for generating display information of a playlist, an electronic device, a computer-readable storage medium, a computer program product, and a computer program.

In a first aspect, an embodiment of the present disclosure provides a method for generating display information of a playlist, including:
acquiring a target playlist, the target playlist including at least one song to be played; generating display information corresponding to the target playlist, wherein the display information is generated based on playlist meta data of the target playlist, the playlist meta data characterizes a multi-dimension feature of the at least one song to be played, and the display information includes a playlist title and/or a playlist cover corresponding to the target playlist.

In a second aspect, an embodiment of the present disclosure provides an apparatus for generating display information of a playlist, including:
an acquisition module, configured to acquire a target playlist, wherein the target playlist includes at least one song to be played;
a generation module, configured to display information corresponding to the target playlist, wherein the display information is generated based on playlist meta data of the target playlist, the playlist meta data characterizes a multi-dimension feature of the at least one song to be played, and the display information includes a playlist title and/or a playlist cover corresponding to the target playlist.

In a third aspect, an embodiment of the present disclosure provides an electronic device, including:
a processor and a memory communicatively connected with the processor;
the memory stores computer-executable instructions;
the processor executes the computer-executable instructions stored in the memory to implement the method for generating display information of a playlist described in the first aspect and various possible designs of the first aspect.

In the fourth aspect, an embodiment of the present disclosure provides a computer-readable storage medium. The computer-readable storage medium stores computer-executable instructions, and when the computer-executable instructions are executed by a processor, the method for generating display information of a playlist described in the first aspect and various possible designs of the first aspect is implemented.

In a fifth aspect, an embodiment of the present disclosure provides a computer program product, including a computer program, which, when executed by a processor, implements the method for generating display information of a playlist described in the first aspect and various possible designs of the first aspect.

In a sixth aspect, an embodiment of the present disclosure provides a computer program which, when executed by a processor, implements the method for generating display information of a playlist as described in the first aspect and various possible designs of the first aspect.

### BRIEF DESCRIPTION OF DRAWINGS

To describe the technical solutions in the embodiments of the present disclosure or in the prior art more clearly, the accompanying drawings required in the description of the embodiments or the prior art will be described briefly below. Apparently, other accompanying drawings can also be derived from these drawings by those ordinarily skilled in the art without creative efforts.
Fig. 1 is an application scenario diagram of a method for generating display information of a playlist provided by an embodiment of the present disclosure;
Fig. 2 is another application scenario diagram of a method for generating display information of a playlist provided by the embodiment of the present disclosure;
Fig. 3 is a flow chart 1 of a method for generating display information for a playlist provided by an embodiment of the present disclosure;
Fig. 4 is a flowchart of the specific implementation steps of step S102 in the embodiment shown in Fig. 3;
Fig. 5 is a flowchart of the specific implementation steps of step S1021 in step S102;
Fig. 6 is a schematic data structure diagram of a song feature expression corresponding to a target playlist provided by an embodiment of the present disclosure;
Fig. 7 is a schematic diagram of a process of generating a playlist cover provided by an embodiment of the present disclosure;
Fig. 8 is a flow chart 2 a method for' generating display information of a playlist provided by the embodiment of the present disclosure;
Fig. 9 is a flowchart of the specific implementation steps of step S202 in the embodiment shown in Fig. 8;
Fig. 10 is a flowchart of the specific implementation steps of step S205 in the embodiment shown in Fig. 8;
Fig. 11 is a schematic diagram of a playlist cover provided by an embodiment of the present disclosure;
Fig. 12 is a structural block diagram of an apparatus for generating display information of a playlist provided by an embodiment of the present disclosure;
Fig. 13 is a schematic structural diagram of an electronic device provided by an embodiment of the present disclosure; and
Fig. 14 is a schematic diagram of the hardware structure of the electronic device provided by the embodiment of the present disclosure.

### DETAILED DESCRIPTION

In order to make the purpose, technical scheme and advantages of the embodiment of the present disclosure more clear, the technical scheme in the embodiments of the present disclosure will be described clearly and completely with the attached drawings. Obviously, the described embodiments are a part of the embodiments of the present disclosure, but not the whole embodiments. Based on the embodiments in the present disclosure, all other embodiments obtained by those skilled in the art without creative efforts belong to the protection scope of the present disclosure.

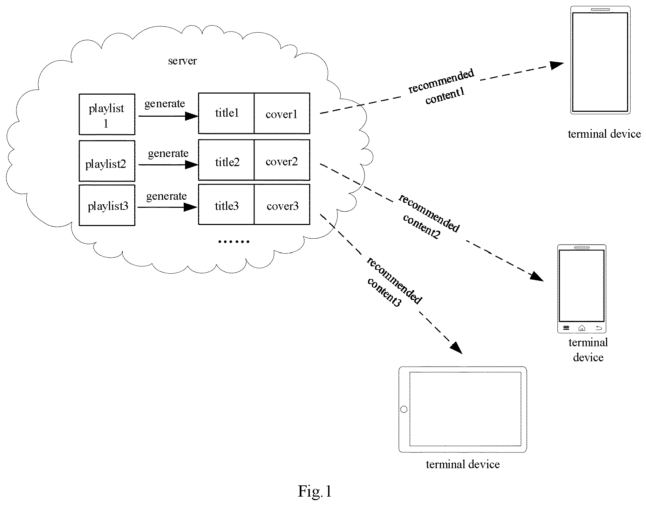

The application scenario of the embodiments of the present disclosure is explained below:
The method for generating display information of a playlist provided by the embodiment of the present disclosure can be applied to the application scenario of playlist recommendation. Fig. 1 is an application scenario diagram of the method for generating display information of a playlist provided by the embodiment of the present disclosure. Particularly, as shown in Fig. 1, the method provided by the embodiment of the present disclosure can be applied to a server, such as a music platform server, and the server communicates with a terminal device, wherein the terminal device is a device operated by a user and used for running a music APP, such as a smart phone and a tablet computer. After generating the recommended playlist based on the preset rules, the server generates the display information corresponding to the recommended playlist, such as the playlist title and the playlist cover corresponding to the recommended playlist, through the method for generating display information of a playlist provided by the embodiment of the present disclosure. Then, the server sends the recommended playlist (shown as playlist 1, playlist 2 and playlist 3 in the figure) and the corresponding playlist titles (shown as title 1, title 2 and title 3 in the figure) and playlist covers (shown as cover 1, cover 2 and cover 3 in the figure) to the terminal device as a whole recommended content (shown as recommended content 1, recommended content 2 and recommended content 3 in the figure) to display on the side of the terminal device, so as to complete the process of recommending the playlist. Then, the terminal device responds to the user's instruction, and consumes the recommended playlist based on the display information such as the playlist title and the playlist cover, to complete the playing of the song in the recommended playlist.

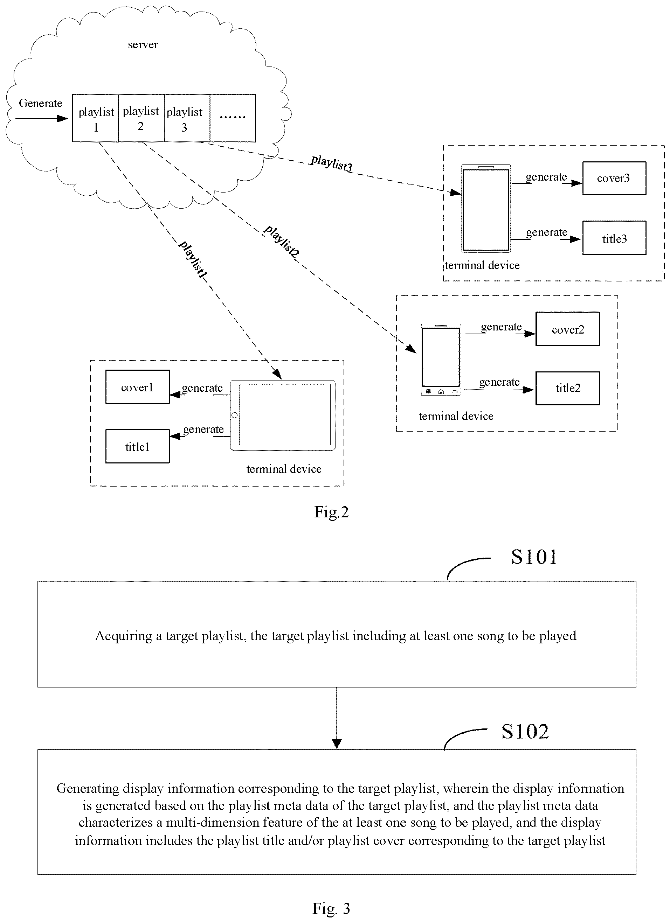

Fig. 2 is another application scenario diagram of the method for generating display information of a playlist provided by the embodiment of the present disclosure. Particularly, as shown in Fig. 2, in another possible implementation, the method provided by the embodiment of the present disclosure can be applied to a terminal device, such as a smart phone, a tablet computer, and the terminal device communicates with the server (serving end) through the running music APP (client), and receives the recommended playlist (shown as playlist 1, playlist 2 and playlist 3 in the figure) sent by the server, and then, based on the method for generating display information of a playlist provided by the embodiment of the present disclosure, the terminal device generates display information corresponding to the recommended playlist, such as the playlist titles (shown as title 1, title 2 and title 3 in the figure) and the playlist covers (shown as cover 1, cover 2 and cover in the figure), to display on the side of the terminal device, so as to complete the process of recommending the playlist. Then, the terminal device responds to the user's instruction, and consumes the recommended playlist based on the display information such as the playlist title and the playlist cover, so as to complete the playing of the songs in the recommended playlist.

In the prior art, the generating display information of a playlist is usually generating corresponding words and pictures based on the playlist label manually set in the recommended playlist after generating the recommended playlist, so that the automatically generated playlist title and playlist cover are obtained. However, when the recommended playlist has no manually set playlist label, the corresponding words and pictures will be generated based on the feature in a certain dimension of the playlist, such as "language" and "singer", so as to obtain the playlist title and the playlist cover. However, when the recommended playlist is generated based on the features in a plurality of dimensions of the song, generating the display information of corresponding playlist based on the feature in a single dimension will lead to the problem that the generated display information has a low matching degree with the content of the playlist and cannot accurately display the features of the content of the playlist.

The embodiment of the present disclosure provides a method for generating display information of a playlist to solve the above problems.

Referring to Fig. 3, Fig. 3 is a flow chart 1 of a method for generating display information of a playlist provided by an embodiment of the present disclosure. The method in this embodiment can be applied to a server or a terminal device. In this embodiment, the embodiment of the method is mainly introduced with the server as the executing subject, and the method for generating display information of a playlist includes:
Step S101: acquiring a target playlist, the target playlist including at least one song to be played.

Illustratively, the target playlist is a song collection generated by the server based on a preset rule and a preset music library, wherein the songs included in the target playlist, that is, songs to be played, can be one or more songs to be played based on the specific results of generating the target playlist. The target playlist is determined based on the multi-dimension feature of the song in the music library, for example, based on the "release year", "language", "genre" and "subject of song". For the specific method for generating the target playlist, there is no specific restriction here. Illustratively, the target playlist can be generated by the server based on a preset algorithm before acquiring the target playlist, also can be acquired by communicating with other servers; similarly, when the executing subject of the method in this embodiment is a terminal device, the target playlist can be acquired by communicating with other servers.

Step S102: generating display information corresponding to the target playlist, wherein the display information is generated based on the playlist meta data of the target playlist, and the playlist meta data characterizes the multi-dimension feature of at least one song to be played, and the display information includes the playlist title and/or playlist cover corresponding to the target playlist.

Further, after acquiring the target playlist, the display information matching with the target playlist can be generated based on the features of the target playlist, such as the playlist title and playlist cover. Specifically, the above purposes can be achieved through the playlist meta data (metadata) of the target playlist, wherein the target playlist includes a plurality of songs to be played, and the playlist meta data characterizes the multi-dimension features of the song to be played.

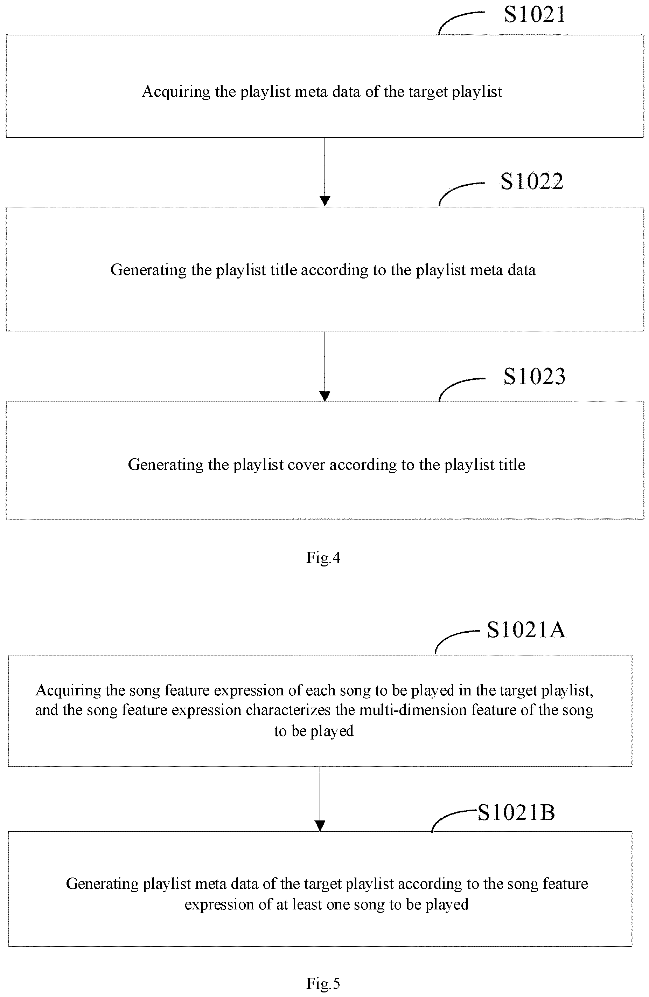

In one possible implementation, the display information includes a playlist title and a playlist cover corresponding to the target song, and the playlist cover is generated based on the playlist title. As shown in Fig. 4, the specific implementation steps of step S102 include:
Step S1021: acquiring the playlist meta data of the target playlist.

Illustratively, the server acquires the playlist meta data corresponding to the target playlist at the same time or after acquiring the target playlist. The playlist meta data characterizes the multi-dimension feature of at least one song to be played. More specifically, in one implementation, the playlist meta data includes the multi-dimension features of each song to be played, and in another implementation, the playlist meta data includes the average value of the multi-dimension feature of respective songs to be played. Furthermore, the multi-dimension feature of the songs to be played characterizes the collection of features of the songs to be played in a plurality of dimensions, for example, the collection of features in the dimensions "release year", "language", "genre" and "subject of song".

Further, based on the different existing states of the playlist meta data, the playlist meta data of the target playlist can be acquired in the following two specific manners, including:
In one possible implementation, if the playlist meta data of the target playlist is valid, that is, the playlist meta data of the target playlist is valid playlist meta data, the server can directly read the playlist meta data, wherein the valid playlist meta data refers to the playlist meta data that can show the main features of respective songs to be played in the target playlist. Specifically, for example, the valid playlist meta data refers to, in the song features in a plurality of dimensions characterized by it, the corresponding feature value is the same as the feature value of a certain proportion (for example, 70%) of the songs to be played in the target playlist, for each song feature. Among them, the target playlist information can be sent by other servers or generated by this server in the previous step of generating the target playlist, which is not specifically limited herein.

In another possible implementation, if the playlist meta data of the target playlist does not exist, the server can generate the playlist meta data of the target playlist through calculation. Illustratively, as shown in Fig. 5, the specific implementation steps include:
step S1021A: acquiring the song feature expression of each song to be played in the target playlist, the song feature expression characterizing the multi-dimension feature of the song to be played.
step S1021B: generating playlist meta data of the target playlist according to the song feature expression of at least one song to be played.

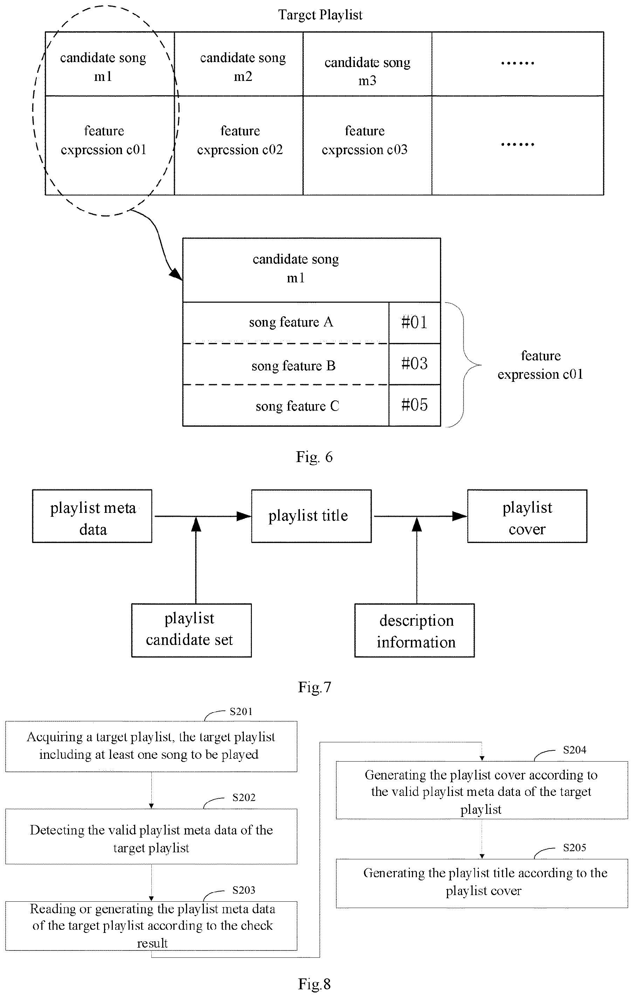

Illustratively, in one or more songs to be played included in the target playlist, each song to be played has a corresponding song feature expression (embedding), and the song feature expression characterizes the multi-dimension feature of the song to be played. Fig. 6 is a schematic data structure diagram of a song feature expression corresponding to a target playlist provided by an embodiment of the present disclosure. As shown in Fig. 6, the target playlist includes songs to be played m1, m2, m3 ... cN, which respectively correspond to the song feature expressions c01, c02 and c03 (only the specific implementation of the song feature expression c1 corresponding to m1 is shown in the figure, and others are similar), and the song feature expression c1 of the song to be played m1 includes features in three dimensions, respectively song feature A, song feature B and song feature C. Among them, illustratively, song feature A characterizes the "song genre", song feature B characterizes the "release year" and song feature C characterizes the "singing language". For the feature in each dimension, the song m1 to be played corresponds to a feature value. As shown in the figure, that is, the feature value of song feature A is #01, which means (song genre is) "rock", the feature value of song feature B is #03, which means (release year is) "1990s"; the feature value of song feature C is #05, which means (singing language is) "French".

Based on the song feature expression of the song to be played in the target playlist, the playlist meta data of the target playlist can be obtained by using the feature value of the corresponding dimension feature in the multi-dimension feature of the song to be played. In one possible implementation, the specific implementation of step S1021B includes: performing weighted average based on song feature expressions of at least two songs to be played to obtain weighted average feature value; according to the weighted average feature, generating the playlist meta data of the target playlist. Specifically, as shown in Fig. 6, for example, the feature values of the respective song features A of the played songs m1, m2 and m3 are averaged to obtain the average feature value aver _ 1 of the song feature A; the feature values of the respective song features B of the played songs m1, m2 and m3 are averaged to obtain the average feature value aver _ 2 of the song feature B, and the feature values of the respective song features C of the played songs m1, m2 and m3 are averaged to obtain the average feature value aver _3 of the song feature C. Then, based on the combination of the average feature value aver_1 of song feature A, aver_2 of song feature B and aver_3 of song feature C, the playlist meta data of the target playlist is obtained. Illustratively, the feature dimension included in the playlist meta data covers the feature dimension included in the song feature expression, that is, on the basis of including the feature dimension: song feature A, song feature B and song feature C, the playlist meta data can include the feature dimension: playlist feature F, for example, indicating the number of songs in the playlist, so as to achieve more accurate feature expression of the target playlist.

In this embodiment, the feature values of the corresponding dimension features in the multi-dimension feature of the songs to be played are calculated, so that the playlist meta data of the target playlist can show the whole feature of respective songs to be played in respective dimensions, and the feature performance is more balanced, thus improving the accuracy and stability of the playlist meta data.

In another implementation, the song to be played includes a seed song, and the specific implementation of step S1021B includes acquiring the seed song and generating playlist meta data according to the song feature expression of the seed song, wherein the seed song is determined based on the user instruction.

Specifically, the seed song is the song used to generate the target playlist. In one implementation, by extracting the multi-dimension feature of the seed song and based on the multi-dimension feature of the seed song, the song closest to the multi-dimension feature of the seed song is sifted from the music library as the candidate song, and then the target playlist is generated based on the collection of the candidate song and the seed song. In the above implementation, the target playlist is generated based on the seed song, and thus the song feature expression of the seed song is the most representative (closest to the playlist meta data). For the above reasons, in the steps of this embodiment, the playlist meta data of the target playlist is generated through the seed song, which simplifies the calculation process of the playlist meta data, reduces the calculation amount, and improves the generating speed of the playlist meta data while ensuring the accuracy of the playlist meta data.

Step S1022: generating the playlist title according to the playlist meta data.

Illustratively, the specific steps of generating the playlist title include: acquiring a title preselected set, wherein the title preselected set includes at least one candidate title; calculating the matching degree between the title feature expression of each candidate title and the playlist meta data, wherein the title feature expression characterizes the multi-dimension feature of the candidate title; based on the matching degree corresponding to each candidate title, determining the target title, and generating the playlist title based on the target title. The title preselected set is generated based on Natural Language Processing (NLP) technology, and contains a plurality of collections of candidate titles used for expressing multi-dimension feature of different songs; after acquiring the playlist meta data, based on the multi-dimension feature characterized by the title feature expression of each candidate title in the title preselected set, the feature distance between multi-dimension features corresponding to the playlist meta data is calculated, so as to determine the matching degree between the candidate title and the playlist meta data, and further, determine the candidate title with the largest matching degree as the target title, thereby taking the target title as the playlist title, and completing the step of generating the playlist title.

Further, the title feature expression and the playlist meta data include the same target dimension feature, such as "release year", "language", "genre" and "song body"; the step of calculating the matching degree between the title feature expression and the playlist meta data includes: based on the target dimension feature, acquiring the first feature value of the candidate title under the target dimension feature and the second feature value of the target playlist under the target dimension feature; based on the weighted distance between the first feature value and the second feature value, obtaining the matching degree between the title feature expression of the candidate title and the playlist meta data.

In this embodiment, by acquiring the title preselected set and calculating the feature distance between the playlist meta data and the candidate titles in the title preselected set, the target title that best matches the playlist meta data is determined, so as to obtain the playlist title, so that the features of the playlist title are closest to those of the target playlist in a plurality of dimensions, thereby improving the consistency between the playlist title and the content of the target playlist and improving the accuracy of the playlist title.

Step S1023: generating a playlist cover according to the playlist title.

Fig. 7 is a schematic diagram of a process of generating a playlist cover provided by an embodiment of the present disclosure. As shown in Fig. 7, for example, after acquiring the playlist meta data, firstly, the feature extracting is performed based on the playlist meta data, and the playlist title of the target playlist is generated from the playlist candidate set by using natural language processing technology. Among them, the playlist title is the words used to describe the content feature and genre feature of the song in the target playlist, such as "French movie music" and "My hot dance party". Then, based on the word information corresponding to the generated playlist title, the playlist cover is generated. Specifically, for example, based on the word information corresponding to the playlist title and the description information for the target playlist, such as the feature in at least one dimension in the playlist meta data, the image features such as an element, a main color, composition, etc. in the image are determined and rendered by using a preset image generation algorithm , so as to generate an image that can express the contents and meaning contained in the word information corresponding to the playlist title, namely, a playlist cover. It should be noted that in the steps of this embodiment, because the features of the target playlist contained in the playlist title are less (the features have been reduced in dimension in the process of generating the playlist title), the accuracy of the generated playlist cover can be further improved in combination with the description information for the target playlist, in the process of generating the playlist cover based on the word information corresponding to the playlist title.

In the steps of this embodiment, using the characteristics of word information and image information, firstly, the word information with more easy, lower difficulty and better information description accuracy is generated based on the playlist meta data to obtain the playlist title, and then the image information with higher complexity is constructed based on the word information to obtain the playlist cover, thus improving the accuracy of the generated playlist title and playlist cover, and enabling the playlist title and playlist cover to better show the features of the content of the target playlist.

Optionally, after step S102, it further includes:
The server sends the display information corresponding to the target playlist to the terminal device, so that the terminal device can display the display information, that is, the playlist cover and/or the playlist title. Then, the terminal device will play or display the song to be played in the corresponding target playlist based on the trigger instruction for the display information.

Similarly, if the terminal device is used as the executing subject of this embodiment of method, after generating the display information corresponding to the target playlist, the terminal device displays the display information, that is, the playlist cover and/or the playlist title, and then the terminal device will play or display the song to be played in the corresponding target playlist based on the trigger instruction for the display information.

In this embodiment, by acquiring a target playlist, the target playlist including at least one song to be played; generating display information corresponding to the target playlist, wherein the display information is generated based on the playlist meta data of the target playlist, and the playlist meta data characterizes the multi-dimension feature of the at least one song to be played, and the display information includes the playlist title and/or playlist cover corresponding to the target playlist. The display information is generated by acquiring the target playlist and using the playlist meta data of the target playlist, so that the generated display information can be matched with the target playlist in a plurality of dimensions, thereby improving the consistency between the generated display information and the content of the playlist and achieving accurate display of the feature of the content of the playlist title.

Referring to Fig. 8, Fig. 8 is a flow chart 2 of a method for generating display information of a playlist display information provided by the embodiment of the present disclosure. On the basis of the embodiment shown in Fig. 3, this embodiment provides another implementation step of step S102, and adds the step of checking the playlist meta data. The method for generating display information of s playlist includes:
Step S201: acquiring a target playlist, the target playlist including at least one song to be played.
Step S202: detecting the valid playlist meta data of the target playlist.

Illustratively, the target playlist can be generated in the previous step or acquired by receiving data sent by other servers. Based on the specific implementation of acquiring the target playlist, the target playlist can be valid playlist meta data, or invalid playlist meta data, or no playlist meta data. Based on the different existing states of the playlist meta data of the target playlist, the corresponding processing manner are performed, so as to accurately acquire the playlist meta data of the target playlist. Therefore, after acquiring the target playlist, the playlist meta data of the target playlist is detected, specifically, for example, whether the corresponding playlist meta data exists in the target playlist and whether the playlist meta data is valid playlist meta data.

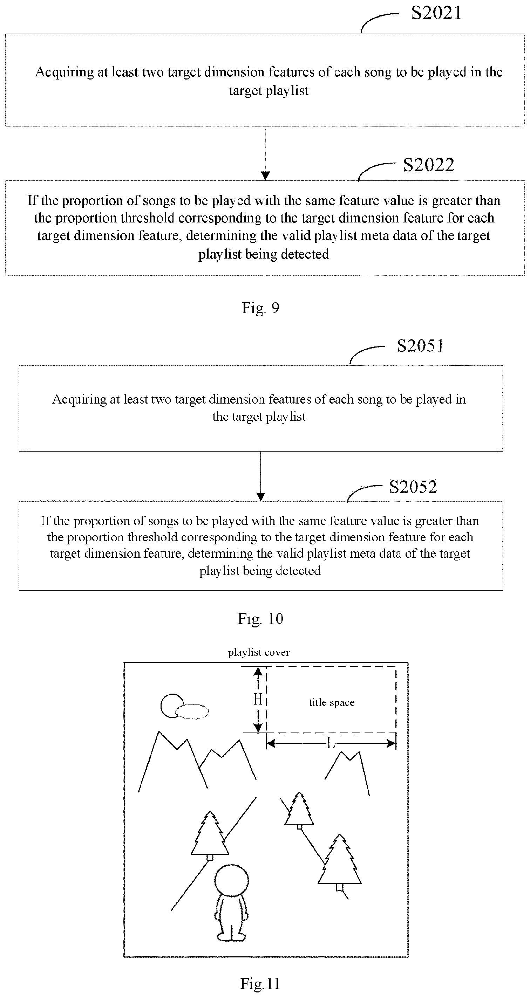

As shown in Fig. 9, the specific implementation steps of step S202 include:
Step S2021: acquiring at least two target dimension features of each song to be played in the target playlist;
Step S2022: determining the valid playlist meta data of the target playlist being detected, if the proportion of songs to be played with the same feature value is greater than the proportion threshold corresponding to the target dimension feature for each target dimension feature.

Illustratively, referring to the data structure of song feature expression shown in Fig. 6, for example, the song feature expressions of songs m1, m2 and m3 to be played include features in three dimensions, namely, song feature A, song feature B and song feature C, and each song feature corresponds to a feature value. In the song features A, B and C, if the feature values of the respective songs to be played under the song feature exist subject types for each song feature, for example, the same proportion of feature values is more than 50%, then the song feature is valid. For example, for the song feature A, in the songs m1, m2 and m3 to be played, the feature value of the songs m1 and m2 to be played is #1, and the feature value of the song m3 to be played is # 2; then for song feature A, the proportion of feature value #1 is 66.7% (more than 50%), and the proportion of feature value #2 is 33.3%, and thus, the song feature A is a valid song feature. For another example, for song feature b, in the songs to be played m1, m2 and m3, the feature value of the song to be played m1 is #1, the feature value of the song to be played m2 is #2, and the feature value of the song to be played m3 is # 3; then for the song feature b, the proportion of feature value #1 is 33.3%, the proportion of feature value #2 is 33.3%, and the proportion of feature value #3 is 33.3%, all of which are less than 50%, and thus, the song feature b is an invalid song feature. Further, if all the song features are valid, the target playlist has valid playlist meta data. It should be noted that the songs to be played in the target playlist correspond to the playlist meta data, and the playlist meta data is formed based on the songs to be played in the target playlist. Therefore, if all the song features are valid, the playlist meta data corresponding to the target playlist can be used as valid playlist meta data for subsequent calculation.

Step S203: reading or generating the playlist meta data of the target playlist according to the check result.

For example, according to the check result, if there is valid playlist meta data corresponding to the target playlist, the valid playlist meta data is read, and the playlist cover is generated based on the valid playlist meta data; if there is no valid playlist meta data corresponding to the target playlist, the valid playlist meta data is generated based on the song feature expression of each song to be played in the target playlist, and then the playlist cover is generated based on the valid playlist meta data. For the specific implementation, the related introduction in step S1021 in the embodiment shown in Fig. 3 is referred, which will not be repeated here.

Step S204: generating a playlist cover according to the valid playlist meta data of the target playlist.

Illustratively, after obtaining the valid playlist meta data, the pre-trained image generation model can be used for rendering, and the multi-dimension song feature characterized by the valid playlist meta data can be used as parameters for generating image, so as to acquire the playlist cover, wherein the image generation model has the ability to map the multi-dimension song feature into image features and render them based on the image features to obtain the corresponding image, wherein the image features include an element, a main color, composition and the like. The image generation model (generator model) can be obtained by training the manually marked images as samples, which will not be described here.

Step S205: generating the playlist title according to the playlist cover.

Further, after obtaining the playlist cover, a corresponding playlist title is generated based on the playlist cover. Illustratively, as shown in Fig. 10, the specific implementation steps of step S205 include:
Step S2051: determining a title space according to the playlist cover, wherein the title space is an area in the playlist cover for rendering the playlist title.
Step S2052: generating the playlist title based on a size of the title space.

Fig. 11 is a schematic diagram of a playlist cover provided by an embodiment of the present disclosure. As shown in Fig. 11, there is a blank area, namely title space, which can be used to render the title on the upper right of the playlist cover (image). For different playlist covers, the position and size of the title space may be different. In order to achieve a better visual effect, the playlist title is usually set on the layer above the playlist cover (that is, the playlist title will cover the playlist cover). Therefore, in this embodiment, in order to avoid the playlist title from blocking the valid information in the playlist cover, the playlist title is rendered to the title space, and based on the size of the title space, such as the length (L in the figure) and height (H in the figure) of the title space, from the plurality of target titles determined from the title preselected set, based on the length of the target title (the more the number of words of the title, the greater the length and/or width of the title space), the target title matching the size of the title space is selected, so as to further avoid the playlist cover from being blocked by the playlist title and improve the overall visual effect formed by the playlist cover and the playlist title. The specific implementation of the plurality of target titles determined from the title preselected set can refer to the related introduction in step S1022 in the embodiment shown in Fig. 3, which will not be repeated here.

In the embodiment of the present disclosure, the playlist cover is first determined by the playlist meta data, and then the playlist title is determined based on the playlist cover. Because the playlist meta data (relative to the playlist title) is the data with high dimensions, it has richer feature expression ability for the target playlist, and thus the playlist cover generated based on the playlist meta data can better express the richer features of the target playlist and improve the visual expression of the playlist cover. Meanwhile, after the playlist cover is determined, the playlist title is determined based on the playlist cover, so that the layout of the playlist title and the playlist cover is more reasonable, to avoid the problem of the playlist cover being blocked, and improve the overall visual effect formed by the playlist cover and the playlist title.

In the embodiment of the present disclosure, step S201 is the same as step S101 in the above-mentioned embodiment. The discussion of step S101 is referred to for details, which will not be repeated here.

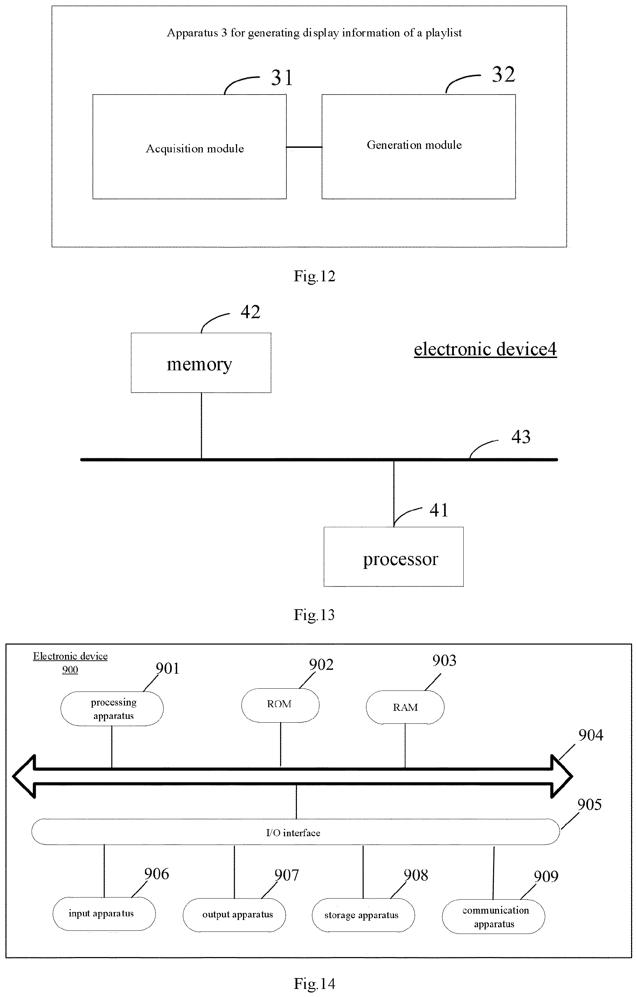

Corresponding to the method for generating display information of a playlist, Fig. 12 is a structural block diagram of an apparatus for generating display information of a playlist provided by the embodiment of the present disclosure. For convenience of explanation, only parts related to the embodiment of the present disclosure are shown. Referring to Fig. 12, the apparatus 3 for generating display information of a playlist includes:
an acquisition module 31, configured to acquire a target playlist, wherein the target playlist includes at least one song to be played;
a generation module 32, configured to display information corresponding to the target playlist, wherein the display information is generated based on playlist meta data of the target playlist, the playlist meta data characterizes a multi-dimension feature of the at least one song to be played, and the display information includes a playlist title and/or a playlist cover corresponding to the target playlist.

In one embodiment of the present disclosure, the display information includes the playlist title and the playlist cover corresponding to the target playlist, wherein the playlist cover is related to the playlist title.

In one embodiment of the present disclosure, the generation module 32 is specifically configured to: acquire the playlist meta data of the target playlist; generate the playlist title according to the playlist meta data; generate the playlist cover according to the playlist title.

In one embodiment of the present disclosure, when acquiring the playlist meta data of the target playlist, the generation module 32 is specifically configured to: acquire a song feature expression of each song to be played in the target playlist, wherein the song feature expression characterizes the multi-dimension feature of the song to be played; generate the playlist meta data of the target playlist according to the song feature expression of the at least one song to be played.

In one embodiment of the present disclosure, the song to be played includes seed song, and when generating the playlist meta data of the target playlist according to the song feature expression of the at least one song to be played, the generation module 32 is specifically configured to: acquire the seed song, and generate the playlist meta data according to the song feature expression of the seed song; wherein the seed song is determined based on a user instruction.

In one embodiment of the present disclosure, when generating the playlist meta data of the target playlist according to the song feature expression of the at least one song to be played, the generation module 32 is specifically configured to: perform weighted average based on song feature expressions of at least two songs to be played to obtain a weighted average feature value; generate the playlist meta data of the target playlist according to the weighted average feature.

In one embodiment of the present disclosure, when generating the playlist title according to the playlist meta data, the generation module 32 is specifically configured to: acquire a title preselected set, wherein the title preselected set includes at least one candidate title; calculate a matching degree between a title feature expression of each candidate title and the playlist meta data, wherein the title feature expression characterizes the multi-dimension feature of the candidate title; determine a target title based on the matching degree corresponding to the each candidate title and generate the playlist title based on the target title.

In one embodiment of the present disclosure, the title feature expression and the playlist meta data include the same target dimension feature. When calculating a matching degree between the title feature expression of each candidate title and the playlist meta data, the generation module 32 is specifically configured to: acquire a first feature value of the candidate title under the target dimension feature and a second feature value of the target playlist under the target dimension feature based on the target dimension feature; obtain the matching degree between the title feature expression of the candidate title and the playlist meta data based on a weighted distance between the first feature value and the second feature value.

In one embodiment of the present disclosure, the display information includes the playlist title and the playlist cover corresponding to the target playlist, and when generating the display information corresponding to the target playlist, the generation module 32 is specifically configured to: acquire the playlist meta data of the target playlist; generate the playlist cover according to the playlist meta data of the target playlist; generate the playlist title according to the playlist cover.

In one embodiment of the present disclosure, when generating the playlist title according to the playlist cover, the generation module 32 is specifically configured to: determine a title space according to the playlist cover, the title space being an area in the playlist cover for rendering the playlist title; generate the playlist title based on a size of the title space.

In one embodiment of the present disclosure, when generating the playlist title according to the playlist cover , the generation module 32 is specifically configured to: acquire a title preselected set, wherein the title preselected set includes at least one candidate title; calculate a matching degree between the title feature expression of each candidate title and the cover feature expression of the playlist cover, wherein the title feature expression characterizes a multi-dimension feature of the candidate title and the cover feature expression characterizes a multi-dimension feature of the playlist cover; determine a target title based on the matching degree corresponding to each candidate title and generating the playlist title based on the target title.

In one embodiment of the present disclosure, after acquiring the target playlist, the generation module 32 is further configured to: detect valid playlist meta data of the target playlist; if the playlist meta data of the target playlist is detected, generate display information corresponding to the target playlist based on the valid playlist meta data; if the playlist meta data of the target playlist is not detected, generate the playlist meta data of the target playlist based on the playlist meta data of the song to be played.

In one embodiment of the present disclosure, when detecting the valid playlist meta data of the target playlist, the generation module 32 is specifically configured to: acquire at least two target dimension features of each song to be played in the target playlist; if for each target dimension feature, a proportion of songs to be played with the same feature value is greater than a proportion threshold corresponding to the target dimension feature, determine the valid playlist meta data of the target playlist being detected.

The acquisition module 31 and the generation module 32 are connected. The apparatus 3 for generating display information of a playlist provided in this embodiment can implement the technical solution of the above embodiments of method. Their implementation principle and technical effect are similar, and thus the details of this embodiment are not repeated here.

Fig. 13 is a schematic structural diagram of an electronic device provided by an embodiment of the present disclosure. As shown in Fig. 13, the electronic device 4 includes:
a processor 41, and a memory 42 in communication with the processor 41;
the memory 42 stores computer-executable instructions;
the processor 41 executes the computer-executable instructions stored in the memory 42 to implement the method for generating display information of a playlist in the embodiments shown in Figs. 3-11.

Optionally, the processor 41 and the memory 42 are connected by a bus 43.

The related descriptions can be understood by referring to the related descriptions and effects corresponding to the steps in the embodiment corresponding to Figs. 3-11, which will not be repeated here.

Referring to Fig. 14, Fig. 5 illustrates a schematic structural diagram of an electronic device 500 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (referred as, PDA), a portable Android device (referred as, PAD), a portable media player (referred as, PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 14 is merely an example and should not pose any limitation to the functions and the range of use of the embodiments of the present disclosure.

As illustrated in Fig. 14, the electronic device 900 may include a processing apparatus 901 (e.g., a central processing unit, a graphics processing unit, etc.), which can perform various suitable actions and processing according to a program stored in a read-only memory (referred as, ROM) 902 or a program loaded from a storage apparatus 908 into a random-access memory (referred as, RAM) 903. The RAM 903 further stores various programs and data required for operations of the electronic device 900. The processing apparatus 901, the ROM 902, and the RAM 903 are interconnected by means of a bus 904. An input/output (referred as, I/O) interface 905 is also connected to the bus 904.

Usually, the following apparatus may be connected to the I/O interface 905: an input apparatus 906 including, for example, a touch screen, a touch pad, a keyboard, a mouse, a camera, a microphone, an accelerometer, a gyroscope, or the like; an output apparatus 907 including, for example, a liquid crystal display (referred as, LCD), a loudspeaker, a vibrator, or the like; a storage apparatus 908 including, for example, a magnetic tape, a hard disk, or the like; and a communication apparatus 909. The communication apparatus 909 may allow the electronic device 900 to be in wireless or wired communication with other devices to exchange data. While Fig. 14 illustrates the electronic device 500 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 909 and installed, or may be installed from the storage apparatus 908, or may be installed from the ROM 902. When the computer program is executed by the processing apparatus 901, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, RAM, ROM, an erasable programmable read-only memory (referred as, EPROM) or flash memory, an optical fiber, a compact disk read-only memory (referred as, CD-ROM), an optical storage device, a magnetic storage device, or any appropriate combination of them. In the present disclosure, the computer-readable storage medium may be any tangible medium containing or storing a program that can be used by or in combination with an instruction execution system, apparatus, or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate, or transmit a program used by or in combination with an instruction execution system, apparatus, or device. The program code contained on the computer-readable medium may be transmitted by using any suitable medium, including but not limited to an electric wire, a fiber-optic cable, radio frequency (referred as, RF) and the like, or any appropriate combination of them.

The above-mentioned computer-readable medium may be included in the above-mentioned electronic device or may also exist alone without being assembled into the electronic device.

The above-mentioned computer-readable medium carries one or more programs, and when the one or more programs are executed by the electronic device, the electronic device is caused to the method illustrated in the above embodiments.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (referred as, LAN) or a wide area network (referred as, WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may characterize a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances. For example, the first acquisition module can also be described as "a unit which acquires at least two Internet protocol addresses".

The functions described herein above may be performed, at least partially, by one or more hardware logic components. For example, without limitation, available exemplary types of hardware logic components include: a field programmable gate array (referred as, FPGA), an application specific integrated circuit (referred as, ASIC), an application specific standard product (referred as, ASSP), a system on chip (referred as, SOC), a complex programmable logical device (referred as, CPLD), etc.

In the context of the present disclosure, the machine-readable medium may be a tangible medium that may include or store a program for use by or in combination with an instruction execution system, apparatus, or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, RAM, ROM, EPROM or flash memory, optical fiber, CD-ROM, optical storage device, magnetic storage device, or any suitable combination of the foregoing.

In a first aspect, according to one or more embodiments of the present disclosure, a method for generating display information of a playlist is provided and includes:
acquiring a target playlist, the target playlist including at least one song to be played; generating display information corresponding to the target playlist, wherein the display information is generated based on playlist meta data of the target playlist, the playlist meta data characterizes a multi-dimension feature of the at least one song to be played, and the display information includes a playlist title and/or a playlist cover corresponding to the target playlist.

According to one or more embodiments of the present disclosure, the display information includes the playlist title and the playlist cover corresponding to the target playlist, wherein the playlist cover is related to the playlist title.

According to one or more embodiments of the present disclosure, the generating display information corresponding to the target playlist includes: acquiring the playlist meta data of the target playlist; generating the playlist title according to the playlist meta data; and generating the playlist cover according to the playlist title.

According to one or more embodiments of the present disclosure, the acquiring the playlist meta data of the target playlist includes: acquiring a song feature expression of each song to be played in the target playlist, wherein the song feature expression characterizes the multi-dimension feature of the song to be played; generating the playlist meta data of the target playlist according to the song feature expression of the at least one song to be played.

According to one or more embodiments of the present disclosure, the song to be played includes a seed song, and generating the playlist meta data of the target playlist according to the song feature expression of the at least one song to be played includes: acquiring the seed song and generating the playlist meta data according to the song feature expression of the seed song; wherein the seed song is determined based on a user instruction.

According to one or more embodiments of the present disclosure, generating the playlist meta data of the target playlist according to the song feature expression of the at least one song to be played includes: performing weighted average based on song feature expressions of at least two songs to be played to obtain a weighted average feature value; generating the playlist meta data of the target playlist according to the weighted average feature.

According to one or more embodiments of the present disclosure, generating the playlist title according to the playlist meta data includes: acquiring a title preselected set, wherein the title preselected set includes at least one candidate title; calculating a matching degree between a title feature expression of each candidate title and the playlist meta data, wherein the title feature expression characterizes the multi-dimension feature of the candidate title; determining a target title based on the matching degree corresponding to the each candidate title and generating the playlist title based on the target title.

According to one or more embodiments of the present disclosure, the title feature expression and the playlist meta data includes the same target dimension feature, and the calculating a matching degree between the title feature expression of each candidate title and the playlist meta data includes: acquiring a first feature value of the candidate title under the target dimension feature and a second feature value of the target playlist under the target dimension feature based on the target dimension feature; obtaining the matching degree between the title feature expression of the candidate title and the playlist meta data based on a weighted distance between the first feature value and the second feature value.

According to one or more embodiments of the present disclosure, the display information includes the playlist title and the playlist cover corresponding to the target playlist, and the generating the display information corresponding to the target playlist includes: acquiring the playlist meta data of the target playlist; generating the playlist cover according to the playlist meta data of the target playlist; generating the playlist title according to the playlist cover.

According to one or more embodiments of the present disclosure, the generating the playlist title according to the playlist cover includes: determining a title space according to the playlist cover, wherein the title space is an area in the playlist cover for rendering the playlist title; generating the playlist title based on a size of the title space.

According to one or more embodiments of the present disclosure, the generating the playlist title according to the playlist cover includes: acquiring a title preselected set, wherein the title preselected set includes at least one candidate title; calculating a matching degree between the title feature expression of each candidate title and the cover feature expression of the playlist cover, wherein the title feature expression characterizes a multi-dimension feature of the candidate title and the cover feature expression characterizes a multi-dimension feature of the playlist cover; determining a target title based on the matching degree corresponding to each candidate title and generating the playlist title based on the target title.

According to one or more embodiments of the present disclosure, after acquiring the target playlist, the method further includes: detecting valid playlist meta data of the target playlist; if the playlist meta data of the target playlist is detected, generating display information corresponding to the target playlist based on the valid playlist meta data; if the playlist meta data of the target playlist is not detected, generating the playlist meta data of the target playlist based on the playlist meta data of the song to be played.

According to one or more embodiments of the present disclosure, the detecting valid playlist meta data of the target playlist includes: acquiring at least two target dimension features of each song to be played in the target playlist; determining the valid playlist meta data of the target playlist being detected, if a proportion of songs to be played with the same feature value is greater than a proportion threshold corresponding to the target dimension feature for each target dimension feature.

In a second aspect, according to one or more embodiments of the present disclosure, an apparatus for generating display information of a playlist is provided and includes:
an acquisition module, configured to acquire a target playlist, wherein the target playlist includes at least one song to be played;
a generation module, configured to display information corresponding to the target playlist, wherein the display information is generated based on playlist meta data of the target playlist, the playlist meta data characterizes a multi-dimension feature of the at least one song to be played, and the display information includes a playlist title and/or a playlist cover corresponding to the target playlist.

According to one or more embodiments of the present disclosure, the display information includes the playlist title and the playlist cover corresponding to the target playlist, wherein the playlist cover is related to the playlist title.

According to one or more embodiments of the present disclosure, the generation module is specifically configured to: acquire the playlist meta data of the target playlist; generate the playlist title according to the playlist meta data; generate the playlist cover according to the playlist title.

According to one or more embodiments of the present disclosure, when acquiring the playlist meta data of the target playlist, the generation module is specifically configured to: acquire a song feature expression of each song to be played in the target playlist, wherein the song feature expression characterizes the multi-dimension feature of the song to be played; generate the playlist meta data of the target playlist according to the song feature expression of the at least one song to be played.

According to one or more embodiments of the present disclosure, the song to be played includes seed song, and when generating the playlist meta data of the target playlist according to the song feature expression of the at least one song to be played, the generation module is specifically configured to: acquire the seed song, and generate the playlist meta data according to the song feature expression of the seed song; wherein the seed song is determined based on a user instruction.

According to one or more embodiments of the present disclosure, when generating the playlist meta data of the target playlist according to the song feature expression of the at least one song to be played, the generation module is specifically configured to: perform weighted average based on song feature expressions of at least two songs to be played to obtain a weighted average feature value; generate the playlist meta data of the target playlist according to the weighted average feature.

According to one or more embodiments of the present disclosure, when generating the playlist title according to the playlist meta data, the generation module is specifically configured to: acquire a title preselected set, wherein the title preselected set includes at least one candidate title; calculate a matching degree between a title feature expression of each candidate title and the playlist meta data, wherein the title feature expression characterizes the multi-dimension feature of the candidate title; determine a target title based on the matching degree corresponding to the each candidate title and generating the playlist title based on the target title.

According to one or more embodiments of the present disclosure, the title feature expression and the playlist meta data includes the same target dimension feature. When calculating a matching degree between the title feature expression of each candidate title and the playlist meta data, the generation module is specifically configured to: acquire a first feature value of the candidate title under the target dimension feature and a second feature value of the target playlist under the target dimension feature based on the target dimension feature; obtain the matching degree between the title feature expression of the candidate title and the playlist meta data based on a weighted distance between the first feature value and the second feature value.

According to one or more embodiments of the present disclosure, the display information includes the playlist title and the playlist cover corresponding to the target playlist, and when generating the display information corresponding to the target playlist, the generation module is specifically configured to: acquire the playlist meta data of the target playlist; generate the playlist cover according to the playlist meta data of the target playlist; generate the playlist title according to the playlist cover.

According to one or more embodiments of the present disclosure, when generating the playlist title according to the playlist cover, the generation module is specifically configured to: determine a title space according to the playlist cover, the title space being an area in the playlist cover for rendering the playlist title; generate the playlist title based on a size of the title space.

According to one or more embodiments of the present disclosure, when generating the playlist title according to the playlist cover , the generation module is specifically configured to: acquire a title preselected set, wherein the title preselected set includes at least one candidate title; calculate a matching degree between the title feature expression of each candidate title and the cover feature expression of the playlist cover, wherein the title feature expression characterizes a multi-dimension feature of the candidate title and the cover feature expression characterizes a multi-dimension feature of the playlist cover; determine a target title based on the matching degree corresponding to each candidate title and generating the playlist title based on the target title.

According to one or more embodiments of the present disclosure, after acquiring the target playlist, the generation module is further configured to: detect valid playlist meta data of the target playlist; if the playlist meta data of the target playlist is detected, generate display information corresponding to the target playlist based on the valid playlist meta data; if the playlist meta data of the target playlist is not detected, generate the playlist meta data of the target playlist based on the playlist meta data of the song to be played.

According to one or more embodiments of the present disclosure, when detecting the valid playlist meta data of the target playlist, the generation module is specifically configured to: acquire at least two target dimension features of each song to be played in the target playlist; if a proportion of songs to be played with the same feature value is greater than a proportion threshold corresponding to the target dimension feature for each target dimension feature, determine the valid playlist meta data of the target playlist being detected.

In a third aspect, according to one or more embodiments of the present disclosure, an electronic device is provided and includes a processor and a memory communicatively connected with the processor;
the memory stores computer-executable instructions;
the processor executes the computer-executable instructions stored in the memory to implement the method for generating display information of a playlist described in the first aspect and various possible designs of the first aspect.

In a fourth aspect, according to one or more embodiments of the present disclosure, a computer-readable storage medium is provided, wherein the computer-readable storage medium stores computer-executable instructions, and when the computer-executable instructions are executed by a processor, the method for generating display information of a playlist described in the first aspect and various possible designs of the first aspect is implemented.

In a fifth aspect, according to one or more embodiments of the present disclosure, a computer program product is provided and includes a computer program which, when executed by a processor, implements the method for generating display information of a playlist described in the first aspect and various possible designs of the first aspect.

In a sixth aspect, according to one or more embodiments of the present disclosure, a computer program is provided. The computer product, when executed by a processor, implements the method for generating display information of a playlist as described in the first aspect and various possible designs of the first aspect.

The foregoing are merely descriptions of the preferred embodiments of the present disclosure and the explanations of the technical principles involved. It will be appreciated by those skilled in the art that the scope of the disclosure involved herein is not limited to the technical solutions formed by a specific combination of the technical features described above and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

Although the present subject matter has been described in a language specific to structural features and/or logical method acts, it will be appreciated that the subject matter defined in the appended claims is not necessarily limited to the particular features and acts described above. Rather, the particular features and acts described above are merely exemplary forms for implementing the claims.

## Claims

1. A method for generating display information of a playlist, comprising:
acquiring a target playlist, the target playlist comprising at least one song to be played; and
generating display information corresponding to the target playlist, wherein the display information is generated based on playlist meta data of the target playlist, the playlist meta data characterizes a multi-dimension feature of the at least one song to be played, and the display information comprises a playlist title and/or a playlist cover corresponding to the target playlist.

2. The method according to claim 1, wherein the display information comprises the playlist title and the playlist cover corresponding to the target playlist, wherein the playlist cover is related to the playlist title.

3. The method according to claim 1, wherein generating display information corresponding to the target playlist comprises:
acquiring the playlist meta data of the target playlist;
generating the playlist title according to the playlist meta data; and
generating the playlist cover according to the playlist title.

4. The method according to claim 3, wherein acquiring the playlist meta data of the target playlist comprises:
acquiring a song feature expression of each song to be played in the target playlist, wherein the song feature expression characterizes the multi-dimension feature of the song to be played;
generating the playlist meta data of the target playlist according to the song feature expression of the at least one song to be played.

5. The method according to claim 4, wherein the song to be played comprises a seed song, and generating the playlist meta data of the target playlist according to the song feature expression of the at least one song to be played comprises:
acquiring the seed song, and generating the playlist meta data according to the song feature expression of the seed song,
wherein the seed song is determined based on a user instruction.

6. The method according to claim 4, wherein generating the playlist meta data ofthe target playlist according to the song feature expression of the at least one song to be played comprises:
performing weighted average based on the song feature expressions of at least two songs to be played to obtain a weighted average feature value; and
generating the playlist meta data of the target playlist according to the weighted average feature.

7. The method according to claim 3, wherein generating the playlist title according to the playlist meta data comprises:
acquiring a title preselected set, wherein the title preselected set comprises at least one candidate title;
calculating a matching degree between a title feature expression of each candidate title and the playlist meta data, wherein the title feature expression characterizes the multi-dimension feature of the candidate title; and
determining a target title based on the matching degree corresponding to the each candidate title and generating the playlist title based on the target title.

8. The method according to claim 7, wherein the title feature expression and the playlist meta data comprise the same target dimension feature, and calculating a matching degree between the title feature expression of each candidate title and the playlist meta data comprises:
acquiring a first feature value of the candidate title under the target dimension feature and a second feature value of the target playlist under the target dimension feature based on the target dimension feature; and
obtaining the matching degree between the title feature expression of the candidate title and the playlist meta data based on a weighted distance between the first feature value and the second feature value.

9. The method according to claim 1, wherein the display information comprises the playlist title and the playlist cover corresponding to the target playlist, and generating the display information corresponding to the target playlist comprises:
acquiring the playlist meta data of the target playlist;
generating the playlist cover according to the playlist meta data of the target playlist;
generating the playlist title according to the playlist cover.

10. The method according to claim 9, wherein generating the playlist title according to the playlist cover comprises:
determining a title space according to the playlist cover, wherein the title space is an area in the playlist cover for rendering the playlist title; and
generating the playlist title based on a size of the title space.

11. The method according to claim 9, wherein the generating the playlist title according to the playlist cover comprises:
acquiring a title preselected set, wherein the title preselected set comprises at least one candidate title;
calculating a matching degree between a title feature expression of each candidate title and the cover feature expression of the playlist cover, wherein the title feature expression characterizes a multi-dimension feature of the candidate title and the cover feature expression characterizes a multi-dimension feature of the playlist cover;
determining a target title based on the matching degree corresponding to each candidate title and generating the playlist title based on the target title.

12. The method according to any one of claims 1-11, wherein after acquiring the target playlist, the method further comprises:
detecting valid playlist meta data of the target playlist;
generating the display information corresponding to the target playlist based on the valid playlist meta data, if the playlist meta data of the target playlist is detected,
generating the playlist meta data of the target playlist based on the playlist meta data of the song to be played, if the playlist meta data of the target playlist is not detected.

13. The method according to claim 12, wherein detecting valid playlist meta data of the target playlist comprises:
acquiring at least two target dimension features of each song to be played in the target playlist;
determining the valid playlist meta data of the target playlist being detected, if a proportion of songs to be played with the same feature value is greater than a proportion threshold corresponding to the target dimension feature for each target dimension feature.

14. An apparatus for generating display information of a playlist, comprising:
an acquisition module, configured to acquire a target playlist, the target playlist comprising at least one song to be played;
a generation module, configured to generate display information corresponding to the target playlist, wherein the display information is generated based on playlist meta data of the target playlist, the playlist meta data characterizes a multi-dimension feature of the at least one song to be played, and the display information comprises a playlist title and/or a playlist cover corresponding to the target playlist.

15. An electronic device comprising: a processor and a memory communicatively connected with the processor, wherein
the memory stores computer-executable instructions;
the processor executes the computer-executable instructions stored in the memory to implement the method for generating display information of a playlist according to any one of claims 1 to 13.

16. A computer-readable storage medium, wherein the computer-readable storage medium stores computer-executable instructions, and when the computer-executable instructions are executed by a processor, the method for generating display information of a playlist according to any one of claims 1-13 is implemented.

17. A computer program product, comprising a computer program which, when executed by a processor, implements the method for generating display information of a playlist according to any one of claims 1-13.

18. A computer program, wherein the computer program, when executed by a processor, implements the method for generating display information of a playlist according to any one of claims 1-13.
